# EUROPÄISCHE PATENTSCHRIFT

(11) **EP 1 408 248 B1**
(45) Veröffentlichungstag und Bekanntmachung des Hinweises auf die Patenterteilung: **20.08.2014**
(21) Anmeldenummer: 03020732.8
(22) Anmeldetag: 12.09.2003
(51) Int. Cl.: F16C 33/46

(54) **Käfig für ein Wälzlager**
Roller bearing cage
Cage pour roulement

(30) Priorität: 08.10.2002 DE 10246825
(43) Veröffentlichungstag der Anmeldung: 14.04.2004
(60) Teilanmeldung: 10180657.8
(73) Patentinhaber: AB SKF, 415 03 Göteborg (SE)
(72) Erfinder: Neder, Günter, 97422 Schweinfurt (DE); Gessendorfer, Matthias, 97509 Unterspiesheim (DE)
(74) Vertreter: Kuhstrebe, Jochen

(56) Entgegenhaltungen:
- DE-A1- 3 509 190
- DE-A1- 4 220 515
- DE-U- 7 432 281
- DE-U1- 7 914 789
- DE-U1- 8 607 236
- US-A- 5 015 105

## Beschreibung

Die Erfindung betrifft einen Käfig für ein Wälzlager, der aus Kunststoff gefertigt ist und mehrere Segmente aufweist. Aus Kunststoff gefertigte Käfige sind bereits vielfach bekannt und kommen in den verschiedensten Anwendungen zum Einsatz. Sie zeichnen sich insbesondere durch ihr geringes Gewicht, ihre kostengünstige Herstellung und vergleichsweise hohe Flexibilität aus. In der Regel sind die Kunststoff-Käfige jeweils als ein einteiliges Bauteil gefertigt. Es sind allerdings auch schon Kunststoff-Käfige bekannt geworden, die aus mehreren Segmenten zusammengesetzt sind.

Ein derartiger Segmentkäfig ist aus der DE-U 84 20 133 bekannt. Die Segmente weisen jeweils eine geschlossene Käfigtasche und zwei halbe Käfigtaschen zur Aufnahme von Wälzkörpern auf. Benachbarte Käfigsegmente ergänzen sich mit den halben Käfigtaschen, die durch eingesetzte Rotationskörper aus Gummi auf Abstand gehalten werden. Die Rotationskörper haben ferner die Aufgabe, das Aneinanderschlagen der Käfigsegmente zu verhindern.

Aus der DE 42 20 515 A1 ist ein Nadellager mit einem Nadelkäfig bekannt, der aus mindestens zwei Käfigsegmenten aufgebaut ist, zwischen welchen im eingebauten Zustand ein Spalt vorhanden ist. Die Käfigsegmente des Nadelkäfigs sind zur Montage mit einem zumindest einen Spalt ausfüllenden Bindemittel zusammengehalten. Das Bindemittel löst sich bzw. schmilzt bei erhöhter Temperatur nach der Montage und gibt die Käfigsegmente für eine Relativbewegung zueinander frei.

Die DE 35 09 190 A1 offenbart einen Segmentkäfig für Schrägzylinderrollenlager, Kegelrollenlager, Pendelrollenlager und Tonnenrollenlager, bei der jeder Wälzkörper von einem kästchenartigen Käfigsegment umfasst ist und die dem benachbarten Käfigsegment gegenüberliegende Stegfläche konvex tonnenrollenförmig gekrümmt ausgebildet ist. Dadurch sollen die Schmierverhältnisse verbessert und die Käfigsegmente für unterschiedliche Krümmungen der Laufringe und unterschiedliche Druckwinkel verwendbar gemacht werden.

Der Erfindung liegt die **Aufgabe** zugrunde, einen Käfig bereitzustellen, der sich für einen Einsatz bei sehr großen Wälzlagern mit verhältnismäßig kleinen Rollen eignet.

Diese Aufgabe wird durch die Merkmalskombination des Anspruchs 1 gelöst. Der erfindungsgemäße Käfig für ein Wälzlager ist aus Kunststoff gefertigt und weist mehrere Segmente auf, die an ihren entgegengesetzten Enden über je eine Stirnseite verfügen. Jedes Segment weist zwei in Umfangsrichtung verlaufende Umfangsstege und wenigstens zwei Verbindungsstege auf, die die beiden Umfangsstege miteinander verbinden und die gemeinsam mit den Umfangsstegen wenigstens eine Tasche zur Aufnahme eines Wälzkörpers ausbilden. Die Taschen sind zur Aufnahme von konischen Wälzkörpern ausgebildet. Bei einer spaltfreien Aneinanderreihung der Segmente des Käfigs an ihren Stirnseiten in einer Art, wie der Käfig im Wälzlager angeordnet wird, verbleibt zwischen den benachbarten Stirnseiten eines letzten und eines ersten Segments ein Zwischenraum. Die mittlere Ausdehnung des Zwischenraums in Umfangsrichtung weist bei Raumtemperatur einen Wert auf, der zwischen 0,15 % und 1 % des Umfangs eines Kreises beträgt, der mittig durch die aneinander gereihten Segmente verläuft.

Der erfindungsgemäße Käfig hat den Vorteil, dass ein ausreichender Raum für die verglichen mit Stahl höhere Wärmeausdehnung des Käfigs vorgesehen ist. Dieser Raum ist aber gleichzeitig klein genug bemessen, dass es nicht zu einem unvertretbaren Aufeinanderschlagen der Stirnflächen benachbarter Segmente und damit zu einer unzulässig hohen Geräuschentwicklung kommt. Insgesamt zeichnet sich der Käfig durch seine reibungsarmen Laufeigenschaften und seine gute Montierbarkeit bei gleichzeitig geringen Kosten und geringem Gewicht aus. Die Taschenform ermöglicht eine sichere Aufnahme des Wälzkörpers und eine zuverlässige Führung des Käfigs am Wälzkörper.

An den Verbindungsstegen sind vorzugsweise Führungsflächen zur Führung der Segmente auf den Wälzkörpern ausgebildet. Über diese Führungsflächen können die Führungsverhältnisse präzise vorgegeben werden. Weiterhin ist es von Vorteil, wenn an den Verbindungsstegen Vorsprünge ausgebildet sind, zur Führung der Segmente auf einer Laufbahn des Wälzlagers für den Fall, dass keine ausreichende Wälzkörperführung mehr vorliegt oder zur Abstützung der Segmente auf der Laufbahn beim Stillstand des Wälzlagers. Dadurch können das Anlaufverhalten und die Notlaufeigenschaften wesentlich verbessert werden. Insbesondere kann jeder Verbindungssteg, auf seinen beiden den Laufbahnen des Wälzlagers zugewandten Seiten, jeweils wenigstens einen Vorsprung aufweisen.

Die Stirnflächen der Segmente sind zwischen den Umfangsstegen vorzugsweise konkav ausgebildet. Dies hat zur Folge, dass benachbarte Segmente beim Anlaufen im Bereich der Umfangsstege aneinander liegen, so dass die aufeinander ausgeübten Kräfte jeweils in einem durch die Umfangsstege abgestützten Bereich eingeleitet werden und somit eine Verformung der Verbindungsstege und ein damit verbundenes Klemmen der Wälzkörper vermieden werden kann.

Die einzelnen Segmente sind untereinander vorzugsweise nicht mechanisch verbunden und somit relativ zueinander verschiebbar, so dass eine Verformung und eine dabei auftretende erhöhte Reibung sowie ein erhöhter Verschleiß vermieden werden können.

Der Käfig ist vorzugsweise aus Poly-Phenyl-Sulfid (PPS) oder aus Poly-Ether-Ether-Keton hergestellt. Beide Materialien zeichnen sich durch eine sehr gute Alterungsbeständigkeit und eine hohe Lebensdauer aus, so dass der erfindungsgemäße Käfig über einen sehr langen Betriebszeitraum eingesetzt werden kann.

Die Erfindung wird nachstehend anhand des in der Zeichnung dargestellten Ausführungsbeispiels erläutert.

Es zeigen:
- Figur 1: ein Segment des erfindungsgemäßen Käfigs in perspektivischer Darstellung,
- Figur 2: den erfindungsgemäßen Käfig in einer schematischen Aufsicht und
- Figur 3: das Segment in einer Schnittdarstellung.

Der erfindungsgemäße Käfig besteht aus mehreren Segmenten, die in Umfangsrichtung ohne feste Verbindung aneinandergereiht sind. Im folgenden wird ein Ausführungsbeispiel des erfindungsgemäßen Käfigs beschrieben, das für einen Einsatz in einem Kegelrollenlager vorgesehen ist, d.h. die einzelnen Segmente liegen nicht plan in einer Ebene, sondern sind alle um den gleichen Winkel zu der Ebene geneigt.

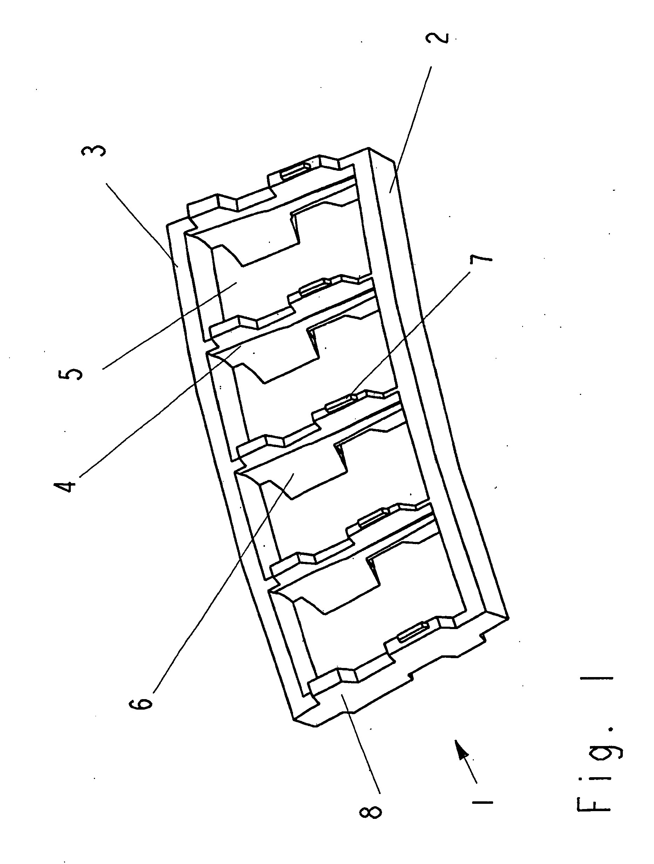

Figur 1 zeigt ein Segment 1 des erfindungsgemäßen Käfigs in perspektivischer Darstellung. Das Segment 1 weist zwei in einem Abstand parallel zueinander verlaufende Umfangsstege 2 und 3 auf. Die Umfangsstege 2 und 3 sind leicht gebogen oder besitzen eine Polygonform, die einer leichten Biegung folgt. Dabei weist die Biegung des ersten Umfangsstegs 2 einen kleineren Krümmungsradius als die Biegung des zweiten Umfangsstegs 3 auf. Zwischen den Umfangsstegen 2 und 3 erstrecken sich Verbindungsstege 4, die ungefähr senkrecht zu den Umfangsstegen 2 und 3 orientiert sind. Insgesamt werden durch die Umfangsstege 2 und 3 und die Verbindungsstege 4 mehrere Taschen 5 ausgebildet, die im dargestellten Ausführungsbeispiel der Aufnahme konischer Wälzkörper dienen. Zur Führung des Segments 1 an den Wälzkörpern weisen die Verbindungsstege 4 jeweils seitlich angeformte Führungsflächen 6 auf. Die Führungsflächen 6 sind in dem Bereich der Verbindungsstege 4, der näher am zweiten Umfangssteg 3 als am ersten Umfangssteg 2 angeordnet ist, besonders stark ausgeprägt.

Die Verbindungsstege 4 erstrecken sich in einer Richtung senkrecht zu der Ebene, in der die Taschen 5 angeordnet sind, so weit, dass sie beim Betrieb des Wälzlagers nur geringfügig hinter den Wälzkörpern zurückstehen und somit die Laufbahnen des Wälzlagers gerade nicht berühren. Dies führt dazu, dass sich die Käfigsegmente 1 beim Stillstand des Lagers auf die Laufbahnen abstützen können und eine derartige Abstützung auch bei einem übermäßigen Verschleiß erfolgt, um die dann nicht mehr vorhandene Wälzkörperführung der Segmente 1 zu ersetzen. Hierzu sind auf den Verbindungsstegen 4 Vorsprünge 7 ausgebildet. Die Vorsprünge 7 sind nicht nur auf der in Figur 1 sichtbaren Oberseite des Segments 1 ausgebildet, sondern auch auf der Unterseite.

Der erste und der letzte Verbindungssteg 4 des Segments 1 weisen auf ihren nach außen gerichteten Stirnflächen 8 jeweils keine Führungsflächen 6 auf, da in diesem Bereich kein Wälzkörper angeordnet wird, sondern das nächste Segment 1. Weiterhin sind die Stirnflächen 8 der Verbindungsstege 4 zwischen den Umfangsstegen 2 und 3 konkav ausgebildet. Dadurch ist sichergestellt, dass einander benachbarte Segmente sich im Bereich der Umfangsstege 2 und 3 berühren. Auf diese Art und Weise kann vermieden werden, dass es durch die Einwirkung benachbarter Segmente 1 aufeinander zu einer Verformung der Verbindungsstege und damit zu einem Klemmen der Wälzkörper kommt, die in den Taschen 5 zwischen den Verbindungsstegen 4 angeordnet sind.

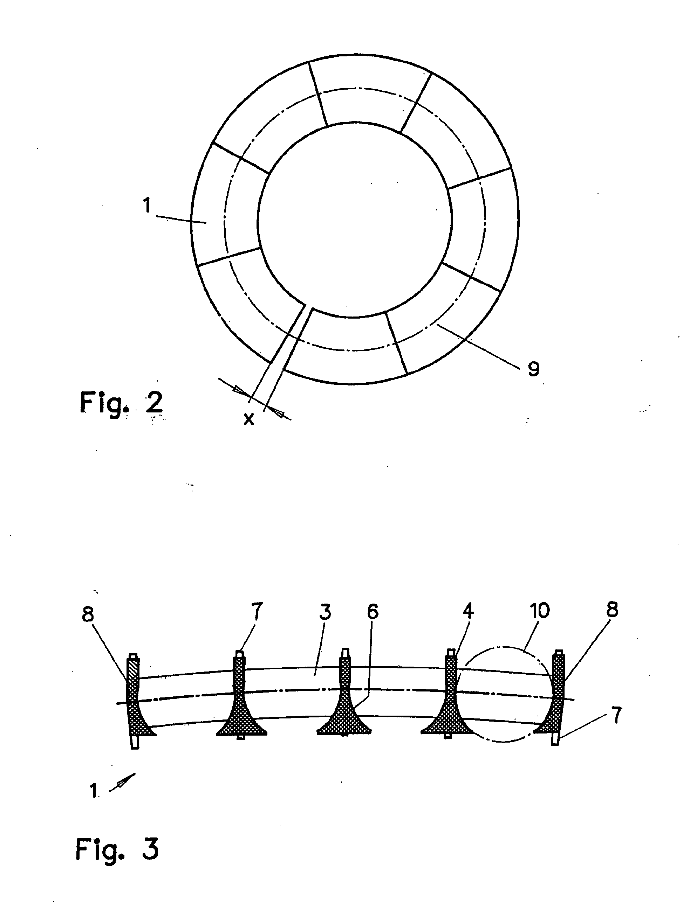

Ein wesentlicher Aspekt der Erfindung bezieht sich auf die Dimensionierung der Segmente 1 des Käfigs. Diese Dimensionierung ist so zu wählen, dass bei einer spaltfreien Aneinanderreihung der Segmente 1 an ihren Stirnseiten 8 in einer Art, wie der Käfig im Wälzlager angeordnet wird, zwischen den benachbarten Stirnseiten 8 eines letzten und eines ersten Segments 1 ein Zwischenraum verbleibt. Die mittlere Ausdehnung des Zwischenraums in Umfangsrichtung muss bei Raumtemperatur einen Wert aufweisen, der zwischen 0,15 % und 1,0 % des Umfangs eines Kreises beträgt, der mittig durch die aneinandergereihten Segmente 1 verläuft. Diese Geometrie wird im einzelnen anhand von Figur 2 erläutert.

Figur 2 zeigt den erfindungsgemäßen Käfig in Aufsicht, wobei die einzelnen Segmente 1 stark schematisiert dargestellt sind. Durch eine gestrichelte Linie ist ein mittig zwischen dem ersten Umfangssteg 2 und dem zweiten Umfangssteg 3 verlaufender Kreis 9 dargestellt. Der Kreis 9 verläuft derart mittig durch die Taschen 5 der Segmente 1, dass er in die Taschen 5 eingesetzte Wälzkörper 10 jeweils auf ihrer Rotationsachse und in der Mitte ihrer axialen Längenausdehnung durchdringt. Um die Dimensionen des Kreises 9 und damit auch die Abmessungen der Segmente 1 präzise zu ermitteln, wird das Wälzlager herangezogen, bei dem der Käfig eingesetzt wird. Der Kreis 9 verläuft dort in der Mitte der axialen Längenausdehnung der Wälzkörper 10 durch deren Rotationsachsen. Auf den Umfang dieses Kreises 9 ist bei der Dimensionierungsregel der in Figur 2 mit x bezeichnete Abstand der Stirnflächen 8 bezogen. Die Einhaltung der Dimensionierungsregel, die auf die Verhältnisse bei Raumtemperatur bezogen ist, ist von größter Bedeutung für eine einwandfreie Funktionsweise. Würde man auf den Abstand x ganz verzichten, d.h. sämtliche Segmente 1 würden spaltfrei aneinander stoßen, so würden sich bei einer Temperaturerhöhung starke Spannungen im Käfig ausbilden, da sich das Kunststoffmaterial des Käfigs wesentlich stärker thermisch ausdehnt als das aus Stahl gefertigte Wälzlager. Die Spannungen würden zu einer Erhöhung der Reibung, zu einem Verklemmen oder gar zu einem Bruch des Käfigs führen. Entsprechendes gilt auch, wenn ein unterer Grenzwert von 0,15 % für das Verhältnis zwischen dem Abstand x und dem Umfang des Kreises 9 wesentlich unterschritten wird. Wählt man den Abstand x dagegen größer als einen oberen Grenzwert in Höhe von 1,0 %, so schlagen die Segmente 1 insbesondere bei einem Betrieb des Wälzlagers bei niedrigen Temperaturen stark aneinander und verursachen dadurch ein hohes Geräusch- und Schwingungsniveau, was zum einen störend wirkt und zum anderen Schäden verursachen kann. Außerdem besteht die Gefahr, dass es durch das Aufeinanderschlagen zu einem Verschleiß kommt. In dem erfindungsgemäß vorgeschlagenen Intervall für den Abstand x lässt sich ein optimaler Ausgleich zwischen der Gefahr der Entstehung von Spannungen und den negativen Auswirkungen eines unzulässig starken Aneinanderschlagens der Segmente 1 erzielen.

Figur 3 zeigt das Segment 1 in Schnittdarstellung. Der Schnitt ist quer zu den Verbindungsstegen 4 geführt. Zum besseren Verständnis ist in einer der Taschen 5 der Umriss eines Wälzkörpers 10 innerhalb der Schnittebene eingezeichnet. Der Wälzkörper 10 liegt an den Führungsflächen 6 der Verbindungsstege 4 an und überragt die Verbindungsstege 4 geringfügig. Dadurch ist zum einen eine gute Wälzkörperführung des Käfigs gegeben und zum anderen die Möglichkeit einer Laufbahnführung bei zunehmendem Verschleiß vorgesehen. In der Darstellung der Figur 3 sind die Vorsprünge 7 auf der Oberseite und auf der Unterseite des Segments zu erkennen.

### Bezugszeichen

- 1: Segment
- 2: erster Umfangssteg
- 3: zweiter Umfangssteg
- 4: Verbindungssteg
- 5: Tasche
- 6: Führungsfläche
- 7: Vorsprung
- 8: Stirnfläche
- 9: Kreis durch die Mitte des Käfigs
- 10: Wälzkörper

## Patentansprüche

1. Käfig für ein Wälzlager, der aus Kunststoff gefertigt ist und mehrere Segmente (1) aufweist, die an ihren entgegengesetzten Enden über je eine Stirnseite (8) verfügen, wobei jedes Segment (1) zwei in Umfangsrichtung verlaufende Umfangsstege (2, 3) und wenigstens zwei Verbindungsstege (4) aufweist, die die beiden Umfangsstege (2, 3) miteinander verbinden und gemeinsam mit den Umfangsstegen (2, 3) wenigstens eine Tasche (5) zur Aufnahme eines Wälzkörpers (10) ausbilden und die Taschen (5) zur Aufnahme von konischen Wälzkörpern (10) ausgebildet sind, **dadurch gekennzeichnet, dass** bei einer spaltfreien Aneinanderreihung der Segmente (1) des Käfigs an ihren Stirnseiten (8) in einer Art, wie der Käfig im Wälzlager angeordnet wird, zwischen den benachbarten Stirnseiten (8) eines letzten und eines ersten Segments (1) ein Zwischenraum verbleibt, dessen mittlere Ausdehnung in Umfangsrichtung bei Raumtemperatur einen Wert aufweist, der zwischen 0,15 % und 1 % des Umfangs eines Kreises (9) beträgt, der mittig durch die aneinander gereihten Segmente (1) verläuft.

2. Käfig nach Anspruch 1, **dadurch gekennzeichnet, dass** an den Verbindungsstegen (4) Führungsflächen zur Führung der Segmente (1) auf den Wälzkörpern (10) ausgebildet sind.

3. Käfig nach einem der vorhergehenden Ansprüche, **dadurch gekennzeichnet, dass** an den Verbindungsstegen (4) Vorsprünge (7) ausgebildet sind zur Führung der Segmente (1) auf einer Laufbahn des Wälzlagers, wenn keine ausreichende Wälzkörperführung mehr vorliegt, oder zur Abstützung der Segmente (1) auf der Laufbahn beim Stillstand des Wälzlagers.

4. Käfig nach Anspruch 3, **dadurch gekennzeichnet, dass** die Verbindungsstege (4) auf ihren beiden den Laufbahnen des Wälzlagers zugewandten Seiten jeweils wenigstens einen Vorsprung (7) aufweisen.

5. Käfig nach einem der vorhergehenden Ansprüche, **dadurch gekennzeichnet, dass** die Stirnflächen (8) der Segmente (1) zwischen den Umfangsstegen (2, 3) konkav ausgebildet sind.

6. Käfig nach einem der vorhergehenden Ansprüche, **dadurch gekennzeichnet, dass** die einzelnen Segmente (1) untereinander nicht mechanisch verbunden sind.

7. Käfig nach einem der vorhergehenden Ansprüche, **dadurch gekennzeichnet, dass** der Käfig aus Poly-Phenyl-Sulfid oder aus Poly-Ether-Ether-Keton gefertigt ist.

## Claims

1. Cage for a rolling bearing, which cage is manufactured from plastic and has a plurality of segments (1) which have at each of their opposite ends an end face (8), each segment (1) having two circumferential webs (2, 3) running in the circumferential direction and at least two connecting webs (4) which connect the two circumferential webs (2, 3) to one another and, together with the circumferential webs (2, 3), form at least one pocket (5) for receiving a rolling body (10), and the pockets (5) being designed for the reception of conical rolling bodies (10), **characterized in that**, when the segments (1) of the cage are lined up with one another, without a gap, at their end faces (8) in a way in which the cage is arranged in the rolling bearing, there remains between the adjacent end faces (8) of a last and a first segment (1) an interspace, of which the average extent in the circumferential direction has at room temperature a value which amounts to between 0.15% and 1% of the circumference of a circle (9) which runs centrally through the segments (1) lined up with one another.

2. Cage according to Claim 1, **characterized in that** guide surfaces for guiding the segments (1) on the rolling bodies (10) are formed on the connecting webs (4).

3. Cage according to one of the preceding claims, **characterized in that** projections (7) are formed on the connecting webs (4) for the purpose of guiding the segments (1) on a raceway of the rolling bearing when there is no longer sufficient rolling-body guidance or for the purpose of supporting the segments (1) on the raceway when the rolling bearing is at a standstill.

4. Cage according to Claim 3, **characterized in that** the connecting webs (4) have at least one projection (7) on each of their two sides facing the raceways of the rolling bearing.

5. Cage according to one of the preceding claims, **characterized in that** the end faces (8) of the segments (1) are formed concavely between the circumferential webs (2, 3).

6. Cage according to one of the preceding claims, **characterized in that** the individual segments (1) are not mechanically connected to one another.

7. Cage according to one of the preceding claims, **characterized in that** the cage is manufactured from polyphenylene sulphide or from polyether ether ketone.

## Revendications

1. Cage pour un palier à roulement, laquelle est fabriquée en plastique et comprend plusieurs segments (1) qui présentent à leurs extrémités opposées à chaque fois un côté frontal (8), chaque segment (1) comprenant deux nervures circonférentielles (2, 3) s'étendant dans la direction circonférentielle et au moins deux nervures de liaison (4) qui relient l'une à l'autre les deux nervures circonférentielles (2, 3) et réalisent, conjointement avec les nervures circonférentielles (2, 3), au moins une cavité (5) pour la réception d'un corps de roulement (10) et les cavités (5) étant réalisées pour la réception de corps de roulement coniques (10), **caractérisée en ce qu'**en cas de juxtaposition sans interstice des segments (1) de la cage au niveau de leurs côtés frontaux (8) d'une manière suivant laquelle la cage est disposée dans le palier à roulement, un espace intermédiaire subsiste entre les côtés frontaux (8) adjacents d'un dernier et d'un premier segment (1), l'étendue moyenne de l'espace intermédiaire dans la direction circonférentielle présentant à la température ambiante une valeur qui vaut entre 0,15 % et 1 % de la circonférence d'un cercle (9) qui s'étend centralement à travers les segments (1) juxtaposés.

2. Cage selon la revendication 1, **caractérisée en ce que** des surfaces de guidage pour le guidage des segments (1) sur les corps de roulement (10) sont réalisées sur les nervures de liaison (4).

3. Cage selon l'une quelconque des revendications précédentes, **caractérisée en ce que** des saillies (7) sont réalisées sur les nervures de liaison (4) pour le guidage des segments (1) sur un chemin de roulement du palier à roulement, lorsqu'il n'y a plus de guidage suffisant des corps de roulement, ou pour le support des segments (1) sur le chemin de roulement lorsque le palier à roulement est immobile.

4. Cage selon la revendication 3, **caractérisée en ce que** les nervures de liaison (4) comprennent respectivement au moins une saillie (7) sur leurs deux côtés tournés vers les chemins de roulement du palier à roulement.

5. Cage selon l'une quelconque des revendications précédentes, **caractérisée en ce que** les faces frontales (8) des segments (1) sont réalisées de manière concave entre les nervures circonférentielles (2, 3).

6. Cage selon l'une quelconque des revendications précédentes, **caractérisée en ce que** les segments individuels (1) ne sont pas reliés mécaniquement les uns aux autres.

7. Cage selon l'une quelconque des revendications précédentes, **caractérisée en ce que** la cage est fabriquée en polysulfure de phénylène ou en polyétheréthercétone.
